# EUROPÄISCHE PATENTSCHRIFT

(11) **EP 2 844 856 B1**
(45) Veröffentlichungstag und Bekanntmachung des Hinweises auf die Patenterteilung: **13.01.2016**
(21) Anmeldenummer: 13716994.2
(22) Anmeldetag: 05.04.2013
(51) Int. Cl.: F02D 9/04, F02D 9/10, F16K 1/22

(54) **KLAPPENLAGERSYSTEM FÜR EINE KLAPPENWELLE IN EINEM KRAFTFAHRZEUG**
FLAP HINGES SYSTEM FOR A FLAP SHAFT IN A MOTOR VEHICLE
SYSTÈME DE PALIER DE CLAPET POUR UN ARBRE DE CLAPET DANS UN VÉHICULE AUTOMOBILE

(30) Priorität: 04.05.2012 DE 102012103926
(43) Veröffentlichungstag der Anmeldung: 11.03.2015
(73) Patentinhaber: Pierburg GmbH, 41460 Neuss (DE)
(72) Erfinder: GERARDS, Hans, 52538 Gangelt (DE); GRAUTEN, Andreas, 47802 Krefeld (DE)
(74) Vertreter: Patentanwälte ter Smitten Eberlein Rütten Partnerschaftsgesellschaft
(86) Internationale Anmeldenummer: PCT/EP2013/057243
(87) Internationale Veröffentlichungsnummer: WO 2013/164155

(56) Entgegenhaltungen:
- DE-A1- 2 038 225
- DE-A1- 3 707 904
- DE-A1- 19 526 144
- DE-A1-102004 046 076
- JP-A- H08 121 198
- US-A1- 2008 168 767
- US-B1- 6 273 058
- US-B2- 7 171 804

## Beschreibung

Die Erfindung betrifft ein Klappenlagersystem für eine Klappenwelle in einem Kraftfahrzeug mit einem Radiallager, in dem die Klappenwelle, auf der ein Klappenkörper angeordnet ist, drehbeweglich angeordnet ist, einem Kanalgehäuse, dessen Durchströmungsquerschnitt durch Drehung der Klappenwelle mit dem Klappenkörper regelbar ist, einem Lagergehäuse, welches das Radiallager radial umgibt, einem Lagergehäusedeckel, welcher das Lagergehäuse axial verschließt und eine Öffnung aufweist, durch die ein Klappenwellenende aus dem Lagergehäuse ragt und einer Hülse, welche zumindest abschnittsweise das Lagergehäuse radial umgibt.

Es sind verschiedene Klappenlagersysteme in Kraftfahrzeugen bekannt. Insbesondere bei Klappen in thermisch beanspruchten Bereichen ist es erwünscht, an der Seite an der die Aktoren angreifen, eine gute Wärmeabfuhr zu erzielen, um insbesondere elektrische Steiler vor einer Überhitzung zu schützen. Aus diesem Grund werden vor allem bei Abgasklappen Klappenlagersysteme verwendet, deren Lager nach außen nicht vollständig in einem geschlossenen Gehäuse angeordnet sind, sondern nach außen teilweise offen ausgebildet sind. Dies führt dazu, dass die über die Klappenwelle transportierte Wärme über die Umgebung zumindest teilweise abgeführt werden kann.

Des Weiteren müssen diese Klappenlagersysteme geeignet sein, Wärmedehnungen in der Klappenwelle oder den Lagerteilen, auszugleichen, um eine Leichtgängigkeit der Klappenwelle sicherzustellen. Hierzu ist es auch erforderlich, Ablagerungen an der Klappenwelle im Bereich der Lagerung weitestgehend zu vermeiden, so dass verschiedene Maßnahmen bekannt geworden sind, eine möglichst gute innere und äußere Dichtigkeit an der Klappenwellenlagerung herzustellen.

So wird in der DE 195 26 144 A1 und der DE 100 06 795 A1 eine Anordnung einer Drosselklappe offenbart, deren Klappenwelle an ihrer zum Steller weisenden Seite über ein in einem Lagergehäuse angeordneten Radiallager gelagert ist. Zur Abdichtung ist im Lagergehäuse zusätzlich eine Axiallagerscheibe angeordnet, die entsprechend geformt gegen einen kegeligen Absatz der Klappenwelle anliegt. Diese Axiallagerscheibe wird gegen eine Axialwand, die das Lagergehäuse verschließt, gedrückt, indem eine Druckfeder die Welle und somit den Wellenabsatz in Richtung der Axialwand vorspannt. Die Feder ist von einer Hülse umgeben, die bis über den Rand des Lagergehäuses ragt.

Des Weiteren ist aus der DE 37 07 904 A1 ein Klappenventil für eine Abgasleitung bekannt, dessen Welle in einer Büchse aus Keramik gelagert ist, die eine kalottenförmige Außenkontur aufweist, über die die Büchse federbelastet in ein entsprechend geformtes Lagergehäuseteil gedrückt wird. Das Lagergehäuseteil, welches die Büchse aufnimmt, wird mittels eines Deckels weitgehend, jedoch nicht vollständig, verschlossen.

Diese bekannten Klappenlagersysteme reduzieren durch die Hülse die Menge an Spritzwasser, den die Lagerung im Betrieb ausgesetzt wird. Jedoch kann ein Eindringen nicht vollständig verhindert werden, da ein Spalt zwischen dem Lagergehäuse und der Hülse vorgesehen werden muss, da aufgrund der thermischen Belastung unterschiedliche Dehnungen der Materialien entstehen, so dass durch den Spalt ein Schleifen oder Verhaken der Bauteile verhindert wird. Daraus folgt jedoch, dass das Spritzwasser über den Spalt in den Lagerbereich eindringen kann, sich entlang der Welle verteilt und dort unter anderem aufgrund der thermischen Belastung verdampft, so dass Ablagerungen zwischen Welle und Lager verbleiben, die zu einem Ausfall führen können. Einmal in diesen Bereich eingedrungenes Wasser kann auch aufgrund des relativ kleinen Spaltes nur schwer wieder aus dem Lagerbereich entfernt werden, so dass es im Innern verbleibt.

In der DE 10 2004 046 076 A1 wird eine Lagereinrichtung für eine Abgasklappe offenbart, die eine Gleitlagerhülse aufweist.

Es ist daher Aufgabe der Erfindung, ein Klappenlagersystem für eine Klappenwelle in einem Kraftfahrzeug zu schaffen, bei der einerseits das Lagersystem möglichst geringen Spritzwassermengen ausgesetzt wird und andererseits einmal eingedrungenes Spritzwasser wieder aus dem Lagerbereich entfernt werden kann, um Ablagerungen im Bereich der Wellenlagerung zu vermeiden.

Diese Aufgabe wird durch ein Klappenlagersystem für eine Klappenwelle in einem Kraftfahrzeug mit den Merkmalen des Hauptanspruchs gelöst. Dadurch, dass am von der Hülse umgebenen Abschnitt des Lagergehäuses am Außenumfang eine umlaufende Nut ausgebildet ist, wobei das aus dem Lagergehäuse ragende Klappenwellenende geodätisch in gleicher Höhe oder oberhalb des gegenüberliegenden Klappenwellenendes angeordnet ist, wird erreicht, dass Spritzwasser, welches durch den Spalt zwischen der Hülse und dem Lagergehäuse in den Lagerbereich eintritt, sich in der Nut sammelt und durch die Schwerkraft entlang der Nut wieder zum Spalt zurücktransportiert wird. So wird ein Eindringen in den Spalt zwischen Welle und Lager weitestgehend verhindert, was die Lebensdauer des Klappenlagersystems erhöht.

Vorzugsweise ist die Nut im Querschnitt asymmetrisch ausgebildet, wobei die näher zum Klappenkörper angeordnete erste Querschnittswand zur Umfangswand des Lagergehäuses einen kleineren Winkel einschließt als die sich daran anschließende vom Klappenkörper weiter entfernte zweite Querschnittswand der Nut. Dadurch kann das Spritzwasser mit geringer Umlenkung und somit geringem Widerstand in die Nut einströmen, während der Widerstand zum Überströmen der Nut in Richtung des Klappenwellenendes erhöht wird. Entsprechend wird die Abführung des Spritzwassers verbessert.

Dies wird insbesondere dadurch sichergestellt, dass der Winkel zwischen der ersten Querschnittswand und der Umfangswand kleiner als 45° ist und der Winkel zwischen der zweiten Querschnittswand und der Umfangswand größer als 45° ist.

In einer weiteren vorteilhaften Ausgestaltung ist im Lagergehäuse eine Gleitscheibe angeordnet, welche die Klappenwelle umgibt und axial gegen einen konischen oder kegeligen Absatz der Klappenwelle anliegt, wobei das Radiallager axial zwischen der Gleitscheibe und dem Lagergehäusedeckel angeordnet ist. Durch diese Anordnung wird ein Eindringen des Abgases in den Bereich des Radiallagers entlang der Klappenwelle deutlich reduziert, da die Gleitscheibe als Dichtung an der Klappenwelle wirkt.

Des Weiteren ist auf dem Klappenwellenende ein Hebelträger befestigt, der mit einem Betätigungsglied verbunden ist, so dass die Stellvorrichtung beabstandet zur Klappenwelle angeordnet werden kann, was die thermische Belastung der Stellvorrichtung reduziert.

Dabei ist insbesondere darauf zu achten, dass der Hebelträger fluiddicht auf dem Klappenwellenende befestigt ist, wodurch verhindert wird, dass Spritzwasser entlang der Welle durch die Öffnung im Hebelträger ins Innere der Lagerung eindringen kann.

Vorzugsweise erstreckt sich die Hülse vom Hebelträger in Richtung des Lagergehäuses, so dass keine zusätzlichen Dichtelemente erforderlich sind, um ein Eindringen von Wasser entlang der Welle zwischen der Hülse und dem Hebelträger zu verhindern.

Eine einfache Montage und Fixierung der Lagereinheit ergibt sich, wenn der Lagergehäusedeckel form- oder stoffschlüssig am Lagergehäuse befestigt ist.

Vorzugsweise ist das Lagergehäuse abschnittsweise radial von einer Federauflagehülse umgeben, die eine sich radial erstreckende ringförmige Erweiterung aufweist, gegen die eine Rückstellfeder axial anliegt. Hierdurch kann einerseits eine thermische Überlastung der Feder durch Vermeidung einer direkten Auflage der Feder auf dem heißen Kanalgehäuse verhindert werden und andererseits der Spalt, durch den Spritzwasser zum Lagergehäuse durchdringen kann, verringert werden, so dass die überhaupt zum Lagergehäuse gelangende Spritzwassermenge reduziert wird.

Die thermische Belastung der Rückstellfeder wird zusätzlich reduziert, indem die Federauflagehülse zumindest drei Auflagenoppen aufweist, mit denen die Federauflagehülse axial gegen das Kanalgehäuse anliegt, da die Auflagefläche auf diese Weise verringert wird, was den Wärmeübergang wiederum deutlich verschlechtert.

In einer weiterführenden vorteilhaften Ausgestaltung der Erfindung weist die Federauflagehülse zumindest drei Anlagenoppen auf, mit denen die Federauflagehülse radial gegen das Lagergehäuse anliegt. Auch durch diese Maßnahme wird der Wärmeübergang zwischen dem Gehäuse und der Federauflagehülse und somit der Rückstellfeder reduziert und somit die thermische Belastung der Feder gesenkt.

Vorzugsweise weist die Rückstellfeder einen ersten Federschenkel auf, der gegen einen Anschlag am Kanalgehäuse anliegt und einen am entgegengesetzten Ende der Rückstellfeder ausgebildeten zweiten Federschenkel auf, der gegen einen Anschlag am Hebelträger anliegt. So wird die Rückstellung der Klappe in eine Notlaufposition bei Ausfall des Aktors aber auch im Betrieb zur Einstellung einer definierten Position sichergestellt.

Vorzugsweise ist auf der zum ersten Lagergehäuse radial gegenüberliegenden Seite des Kanalgehäuses ein zweites Lagergehäuse ausgebildet, in dem ein zweites Radiallager zur Lagerung der Klappenwelle angeordnet ist. So wird eine zweiseitige Lagerung erzeugt, die eine dauerhaft leichtgängige Drehung der Klappe bei guter Dichtigkeit im geschlossenen Zustand sicherstellt.

Ein derartig aufgebautes Klappenlagersystem für eine Klappenwelle in einem Kraftfahrzeug weist eine lange Lebensdauer auf, da ein Eindringen von Spritzwasser in den Spalt zwischen der Klappenwelle und den Lagern deutlich reduziert wird. Entsprechend verringern sich die Ablagerungen bei Verdampfung des Wassers in diesem Bereich. Über den Spalt zwischen den Hülsen eingedrungenes Spritzwasser wird wieder abgeführt.

Als Ausführungsbeispiel wird im Folgenden eine Abgasklappe mit einem erfindungsgemäßen Klappenlagersystem für eine Klappenwelle in einem Kraftfahrzeug entsprechend der Zeichnungen beschrieben.
Figur 1 zeigt eine Seitenansicht einer Abgasklappe mit einem erfindungsgemäßen Klappenlagersystem in geschnittener Darstellung.
Figur 2 zeigt den Ausschnitt des Klappenlagersystems der Abgasklappe aus Figur 1 in geschnittener Darstellung.

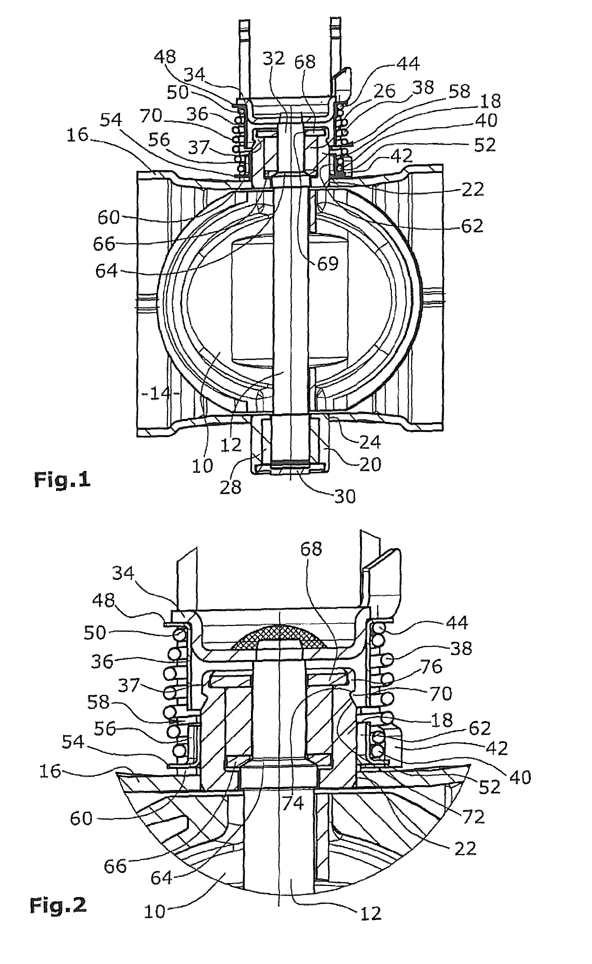

Die in Figur 1 dargestellte Vorrichtung besteht aus einem Klappenkörper 10, welcher drehbar auf einer Klappenwelle 12 in einem Abgaskanal 14 angeordnet ist, der durch ein Kanalgehäuse 16 radial begrenzt wird.

Die Klappenwelle 12 erstreckt sich an entgegengesetzten Seiten des Abgaskanals 14 durch das Kanalgehäuses 16 in Lagergehäuse 18, 20, welche in entsprechende Öffnungen 22, 24 des Kanalgehäuses 16 eingeschweißt sind. Die Lagerung der Klappenwelle 12 erfolgt im ersten Lagergehäuse 18 über ein erstes Radiallager 26 und im zweiten Lagergehäuse 20 über ein zweites Radiallager 28. Das zweite Lagergehäuse 20 wird über ein Deckelelement 30 vollständig von außen verschlossen, so dass ein Eindringen von Wasser von außen an dieser Seite ausgeschlossen ist.

Um eine Betätigung der Abgasklappe zu ermöglichen, ragt die Klappenwelle 12 mit ihrem Klappenwellenende 32 aus dem ersten Lagergehäuse 18 hinaus. Auf dem Klappenwellenende 32 ist ein Hebelträger 34 befestigt, an dessen entgegengesetztem Ende ein nicht dargestelltes Betätigungsglied angeschlossen ist, das den Hebelträger 34 und damit die Welle 12 mit dem Klappenkörper 10 bei Betätigung um die Drehachse bewegt. Die Befestigung des im Wesentlichen topfförmigen Hebelträgers 34 am Klappenwellenende 32 erfolgt beispielsweise durch Nieten oder Schweißen. Dabei sollte darauf geachtet werden, dass die zentrale Öffnung im Hebelträger 34 durch die das Klappenende 32 ragt, gegenüber dem Klappenwellenende 32 dicht ausgeführt ist, so dass keine Flüssigkeit entlang der Klappenwelle 12 durch einen Spalt zwischen Hebelträger 34 und Klappenwellenende 32 in den Lagerbereich eindringen kann.

Der topfförmige Hebelträger 34 wird radial von einer Hülse 36 umgeben, die sich in Richtung des Kanalgehäuses 16 erstreckt und auch einen axialen Abschnitt 37 des Lagergehäuses 18 radial umgibt. Diese Hülse 36 dient gleichzeitig als Führung für eine Rückstellfeder 38, die die Hülse 36 umgibt und deren erster Federschenkel 40 gegen einen Anschlag 42 am Kanalgehäuse 16 anliegt und deren zweiter Federschenkel 44 gegen einen im Schnitt nicht erkennbaren Anschlag am Hebelträger 34 anliegt, so dass bei Drehung der Klappenwelle 12 die Rückstellfeder 38 vorgespannt wird und durch die in der Rückstellfeder 38 gespeicherte Energie eine Rückstellung der Klappenwelle 12 in ihre Ausgangsposition erfolgt, ohne dass ein Drehmoment durch das Betätigungsglied aufgebracht werden muss.

Während die Rückstellfeder 38 axial mit ihrer ersten Windung 50 gegen eine ringförmige Erweiterung 48 der Hülse 36 anliegt, liegt sie mit ihrer letzten Windung 52 gegen eine sich radial erstreckende ringförmige Erweiterung 54 einer Federauflagehülse 56 an, die sich in Richtung der Hülse 36 erstreckt und diesen Bereich der Rückstellfeder 38 führt. Zwischen der Hülse 36 und der Federauflagehülse 56 verbleibt ein Spalt 58, um bei thermischen Dehnungen oder beim Zusammenziehen der Rückstellfeder 38 eine Berührung der beiden Hülsen 36, 56 zu vermeiden, da dies die Funktionsfähigkeit der Abgasklappe beeinträchtigen könnte.

Die Federauflagehülse 56 wird durch die Rückstellfeder 38 gegen das Kanalgehäuse 16 gedrückt, wobei zur Vermeidung eines Wärmeübergangs vom Kanalgehäuse 16 auf die Federauflagehülse 56 und von dort auf die Rückstellfeder 38, die Federauflagehülse 56 nicht flächig sondern lediglich über einzelne Auflagenoppen 60 auf dem Kanaigehäuse 16 aufliegt. Auch eine zu große Ablagefläche zum Lagergehäuse 18 wird vermieden, indem im Innern der Federauflagehülse 56 Anlagenoppen 62 ausgebildet sind, mit denen die Federauflagehülse 56 gegen das Lagergehäuse 18 anliegt. So wird die Lage der Federauflagehülse 56 festgelegt, ohne zu große Wärmeübergangsflächen zur Rückstellfeder 38 zu schaffen.

Die Rückstellfeder 38 befindet sich zwischen den beiden ringförmigen Erweiterungen 48, 54 der beiden Hülsen 36, 56 in einem axial leicht vorgespannten Zustand, wodurch die Klappenwelle 12 über den Hebelträger 34 in Richtung des ersten Lagergehäuses 18 vorgespannt wird. Die Klappenwelle 12 weist einen kegeligen Absatz 64 auf, dessen kleinere Querschnittsfläche im Lagergehäuse 18 in Richtung des Radiallagers 26 weist. Gegen diesen Absatz 64 liegt eine Gleitscheibe 66 an, die korrespondierend hierzu geformt ist und entsprechend gegen den Absatz 64 der Klappenwelle 12 durch die Rückstellfeder 38 vorgespannt anliegt. Der Absatz 64 sowie die korrespondierende Gleitscheibe können auch kugelig ausgeführt werden.

Die entgegengesetzte Seite der Gleitscheibe 66 liegt gegen das Radiallager 26 an, welches wiederum durch die Gleitscheibe 66 beziehungsweise den Absatz 64 und die Rückstellfeder 38 gegen einen Lagergehäusedeckel 68 gedrückt wird, der das Lagergehäuse 18 verschließt und formschlüssig am axialen Ende des Lagergehäuses 18 an diesem befestigt ist. Am Lagergehäusedeckel 68 ist eine Öffnung 69 ausgebildet, durch die die Klappenwelle 12 nach außen dringt. Da die Klappenwelle 12 relativ zum Lagergehäusedeckel 68 drehbar sein muss, ist hier ein Spalt vorzusehen, durch welchen Wasser, welches durch den Spalt 58 in den Bereich des Lagergehäuses dringt, entlang der Klappenwelle 12 in Richtung des Radiallagers 26 gelangen kann.

Um dies zu verhindern, wird erfindungsgemäß am Außenumfang des Lagergehäuses 18, welches geodätisch auf gleicher Höhe oder oberhalb des zweiten Lagergehäuses 20 angeordnet ist, eine umlaufende Nut 70 ausgebildet, und zwar in dem Abschnitt 37, der von der Hülse 36 radial umgeben ist. Diese Nut 70 weist zwei gegenüberliegende Querschnittswände 72, 74 auf, von denen die erste Querschnittswand 72, welche näher zum Kanalgehäuse 16 angeordnet ist, im Vergleich zur Umfangswand 76 des Lagergehäuses 18 in einem Winkel von etwa 30° angeordnet ist, während die zweite Querschnittswand 74, welche näher zum Hebelträger 34 angeordnet ist, im Vergleich zur Umfangswand 76 des Lagergehäuses 18 in einem Winkel von etwa 60° angeordnet ist. Entsprechend ergibt sich eine asymmetrische Querschnittsform dieser Nut 70.

Wird nun die Abgasklappe Spritzwasser ausgesetzt, so wird der Großteil des Spritzwassers durch die Hülse 36 und die Federauflagehülse 56 daran gehindert in den Lagerbereich einzudringen. Ein Rest Spritzwasser gelangt jedoch über den Spalt 58 zwischen den Hülsen 36, 56 zum Lagergehäuse und strömt an diesem entlang. Der weitaus größte Teil dieses eindringenden Wassers muss allerdings immer den Weg entlang der Umfangswand 76 des Lagergehäuses 18 nehmen, um zur Klappenwelle 12 zu gelangen. Auf dieser Strecke gelangt das Spritzwasser jedoch in die Nut 70 und wird ohne großen Widerstand aufgrund des geringen Winkels der Umfangswand 76 zur ersten Querschnittswand 72 der Nut 70 in Richtung des Nutgrundes bewegt, wo es sich sammelt. Ein Weiterströmen in Achsrichtung der Welle 12 entlang der Umfangswand 76 durch die Nut 70 hindurch wird aufgrund des Winkels zur zweiten Querschnittswand 76 und dem damit verbundenen hohen Strömungswiderstand verhindert. Somit strömt das Wasser entsprechend des geringsten Strömungswiderstandes und des höchsten Druckgefälles entlang der Nut 70 nach unten und tropft an der geodätisch tiefsten Stelle der Nut 70 aus dieser heraus auf den Innenumfang der Hülse 36 und verlässt über den Spalt 58 wieder den Lagerbereich, ohne den Spalt zwischen der Klappenwelle 12 und dem Lagergehäusedeckel 68 zu erreichen.

So wird weitestgehend verhindert, dass Spritzwasser entlang der Klappenwelle 12 in den Bereich des Radiallagers 26 oder der Gleitscheibe 66 eindringt, dort aufgrund der Wärme verdampft und sich so Schmutzstoffe aus dem Spritzwasser an der Klappenwelle 12 absetzen und deren Drehbarkeit beeinträchtigen und Lagerschäden hervorrufen. Entsprechend wird die Haltbarkeit und Lebensdauer eines derartigen Klappenlagersystems deutlich erhöht.

Es sollte deutlich sein, dass der Schutzbereich nicht auf das beschriebene Ausführungsbeispiel begrenzt ist. Insbesondere ist es möglich, diese Erfindung für verschieden aufgebaute Lagersysteme mit Kugellagern, Keramiklagern, Nadellagern oder Gleitlagern, Axiallagern oder Radiallagern sowie deren unterschiedliche Kombinationen zu verwenden. Auch sind selbstverständlich andere Verwendungen als bei einer Abgasklappe denkbar, ohne den Schutzbereich der Ansprüche zu verlassen.

## Patentansprüche

1. Klappenlagersystem für eine Klappenwelle (12) in einem Kraftfahrzeug mit
einem Radiallager (26), in dem die Klappenwelle (12), auf der ein Klappenkörper (10) angeordnet ist, drehbeweglich angeordnet ist, einem Kanalgehäuse (16), dessen Durchströmungsquerschnitt durch Drehung der Klappenwelle (12) mit dem Klappenkörper (10) regelbar ist,
einem Lagergehäuse (18), welches das Radiallager (26) radial umgibt,
einem Lagergehäusedeckel (68), welcher das Lagergehäuse (18) axial verschließt und eine Öffnung (69) aufweist, durch die ein Klappenwellenende (32) aus dem Lagergehäuse (18) ragt und
einer Hülse (36), welche zumindest abschnittsweise das Lagergehäuse (18) radial umgibt,
**dadurch gekennzeichnet, dass**
am von der Hülse (36) umgebenen Abschnitt (37) des Lagergehäuses (18) am Außenumfang eine umlaufende Nut (70) ausgebildet ist, wobei das aus dem Lagergehäuse (18) ragende Klappenwellenende (32) geodätisch in gleicher Höhe oder oberhalb des gegenüberliegenden Klappenwellenendes angeordnet ist.

2. Klappenlagersystem für eine Klappenwelle in einem Kraftfahrzeug nach Anspruch 1,
**dadurch gekennzeichnet, dass**
die Nut (70) im Querschnitt asymmetrisch ausgebildet ist, wobei die näher zum Klappenkörper (10) angeordnete erste Querschnittswand (72) zur Umfangswand (76) des Lagergehäuses (18) einen kleineren Winkel einschließt als die sich daran anschließende vom Klappenkörper (10) weiter entfernte zweite Querschnittswand (74) der Nut (70).

3. Klappenlagersystem für eine Klappenwelle in einem Kraftfahrzeug nach Anspruch 2,
**dadurch gekennzeichnet, dass**
der Winkel zwischen der ersten Querschnittswand (72) und der Umfangswand (76) kleiner als 45° ist.

4. Klappenlagersystem für eine Klappenwelle in einem Kraftfahrzeug nach einem der Ansprüche 2 oder 3,
**dadurch gekennzeichnet, dass**
der Winkel zwischen der zweiten Querschnittswand (74) und der Umfangswand (76) größer als 45° ist.

5. Klappenlagersystem für eine Klappenwelle in einem Kraftfahrzeug nach einem der vorhergehenden Ansprüche,
**dadurch gekennzeichnet, dass**
im Lagergehäuse (18) eine Gleitscheibe (66) angeordnet ist, welche die Klappenwelle (12) umgibt und axial gegen einen konischen oder kegeligen oder kugelschnittförmigen Absatz (64) der Klappenwelle (12) anliegt, wobei das Radiallager (26) axial zwischen der Gleitscheibe (66) und dem Lagergehäusedeckel (68) angeordnet ist.

6. Klappenlagersystem für eine Klappenwelle in einem Kraftfahrzeug nach einem der vorhergehenden Ansprüche,
**dadurch gekennzeichnet, dass**
auf dem Klappenwellenende (32) ein Hebelträger (34) befestigt ist, der mit einem Betätigungsglied verbunden ist.

7. Klappenlagersystem für eine Klappenwelle in einem Kraftfahrzeug nach Anspruch 6,
**dadurch gekennzeichnet, dass**
der Hebelträger (34) fluiddicht auf dem Klappenwellenende (32) befestigt ist.

8. Klappenlagersystem für eine Klappenwelle in einem Kraftfahrzeug nach einem der Ansprüche 6 oder 7,
**dadurch gekennzeichnet, dass**
sich die Hülse (36) vom Hebelträger (34) in Richtung des Lagergehäuses (18) erstreckt.

9. Klappenlagersystem für eine Klappenwelle in einem Kraftfahrzeug nach einem der vorhergehenden Ansprüche,
**dadurch gekennzeichnet, dass**
der Lagergehäusedeckel (68) form- oder stoffschlüssig am Lagergehäuse (18) befestigt ist.

10. Klappenlagersystem für eine Klappenwelle in einem Kraftfahrzeug nach einem der vorhergehenden Ansprüche,
**dadurch gekennzeichnet, dass**
das Lagergehäuse (18) abschnittsweise radial von einer Federauflagehülse (56) umgeben ist, die eine sich radial erstreckende ringförmige Erweiterung (54) aufweist, gegen die eine Rückstellfeder (38) axial anliegt.

11. Klappenlagersystem für eine Klappenwelle in einem Kraftfahrzeug nach Anspruch 10,
**dadurch gekennzeichnet, dass**
die Federauflagehülse (56) zumindest drei Auflagenoppen (60) aufweist, mit denen die Federauflagehülse (56) axial gegen das Kanalgehäuse (16) anliegt.

12. Klappenlagersystem für eine Klappenwelle in einem Kraftfahrzeug nach einem der Ansprüche 10 bis 11,
**dadurch gekennzeichnet, dass**
die Federauflagehülse (56) zumindest drei Anlagenoppen (62) aufweist, mit denen die Federauflagehülse (56) radial gegen das Lagergehäuse (18) anliegt.

13. Klappenlagersystem für eine Klappenwelle in einem Kraftfahrzeug nach einem der Ansprüche 10 bis 12,
**dadurch gekennzeichnet, dass**
die Rückstellfeder (38) einen ersten Federschenkel (40) aufweist, der gegen einen Anschlag (42) am Kanalgehäuse (16) anliegt und einen am entgegengesetzten Ende der Rückstellfeder (38) ausgebildeten zweiten Federschenkel (44) aufweist, der gegen einen Anschlug am Hebelträger (34) anliegt.

14. Klappenlagersystem für eine Klappenwelle in einem Kraftfahrzeug nach einem der vorhergehenden Ansprüche,
**dadurch gekennzeichnet, dass**
auf der zum ersten Lagergehäuse (18) radial gegenüberliegenden Seite des Kanalgehäuses (16) ein zweites Lagergehäuse (20) ausgebildet ist, in dem ein zweites Radiallager (28) zur Lagerung der Klappenwelle (12) angeordnet ist.

## Claims

1. A flap bearing system for a flap shaft (12) in a motor vehicle, comprising
a radial bearing (26) in which the flap shaft (12) having a flap body (10) arranged thereon is arranged in a rotatable manner,
a channel housing (16), the flow cross-section of which can be controlled by rotating the flap shaft (12) with the flap body (10),
a bearing housing (18) that surrounds the radial bearing (26) in a radial manner,
a bearing housing cover (68) that closes the bearing housing (18) in an axial manner and has an opening (69) through which a flap shaft end (32) protrudes from the bearing housing (18), and
a sleeve (36) that surrounds the bearing housing (18) in a radial manner at least in sections,
**characterized in that**
a circumferential groove (70) is formed at the outer circumference at the section (37) of the bearing housing (18) that is surrounded by the sleeve (36), wherein the flap shaft end (32) protruding from the bearing housing (18) is arranged geodetically at the same height or above the opposite flap shaft end.

2. The flap bearing system for a flap shaft in a motor vehicle according to claim 1,
**characterized in that**
the groove (70) is asymmetric in cross section, wherein the first cross-sectional wall (72) arranged closer to the flap body (10) encloses a smaller angle to the circumferential wall (76) of the bearing housing (18) than the adjacent second cross-sectional wall (74) of the groove (70) that is arranged farther away from the flap body (10).

3. The flap bearing system for a flap shaft in a motor vehicle according to claim 2,
**characterized in that**
the angle between the first cross sectional wall (72) and the circumferential wall (76) is smaller than 45°.

4. The flap bearing system for a flap shaft in a motor vehicle according to any one of claims 2 or 3,
**characterized in that**
the angle between the second cross sectional wall (74) and the circumferential wall (76) is larger than 45°.

5. The flap bearing system for a flap shaft in a motor vehicle according to any one of the preceding claims,
**characterized in that**
in the bearing housing (18), a sliding disk (66) is arranged which surrounds the flap shaft (12) and is in axial abutment against a conical or tapered shoulder (64) of the flap shaft (12), wherein the radial bearing (26) is arranged axially between the sliding disk (66) and the bearing housing cover (68).

6. The flap bearing system for a flap shaft in a motor vehicle according to any one of the preceding claims,
**characterized in that,**
to the flap shaft end (32), a fulcrum bracket (34) is fastened which is connected to an actuating member.

7. The flap bearing system for a flap shaft in a motor vehicle according to claim 6,
**characterized in that**
the fulcrum bracket (34) is fastened to the flap shaft end (32) in a fluid-tight manner.

8. The flap bearing system for a flap shaft in a motor vehicle according to any one of claims 6 or 7,
**characterized in that**
the sleeve (36) extends from the fulcrum bracket (34) in the direction of the bearing housing (18).

9. The flap bearing system for a flap shaft in a motor vehicle according to any one of the preceding claims,
**characterized in that**
the bearing housing cover (68) is attached to the bearing housing (18) in a form-fitted or substance-bonded manner.

10. The flap bearing system for a flap shaft in a motor vehicle according to any one of the preceding claims,
**characterized in that**
the bearing housing (18) is, in sections, radially surrounded by a spring support sleeve (56) comprising a radial annular extension (54), with a restoring spring (38) arranged in axial abutment thereon.

11. The flap bearing system for a flap shaft in a motor vehicle according to claim 10,
**characterized in that**
the spring support sleeve (56) comprises at least three abutment knobs (60) via which the spring support sleeve (56) is in axial abutment against the channel housing (16).

12. The flap bearing system for a flap shaft in a motor vehicle according to any one of claims 10 to 11,
**characterized in that**
the spring support sleeve (56) comprises at least three abutment knobs (62) via which the spring support sleeve (56) is in radial abutment against the bearing housing (18).

13. The flap bearing system for a flap shaft in a motor vehicle according to any one of claims 10 to 12,
**characterized in that**
the restoring spring (38) comprises a first spring leg (40) arranged in abutment on an abutment element (42) on the channel housing (16), and a second spring leg (44) formed on the opposite end of the restoring spring (38), which is in abutment on an abutment element on the fulcrum bracket (34).

14. The flap bearing system for a flap shaft in a motor vehicle according to any one of the preceding claims,
**characterized in that**
on the side of the channel housing radially opposite to the first bearing housing (18), a second bearing housing (20) is formed internally of which a second radial bearing (28) for bearing support of the flap shaft (12) is arranged.

## Revendications

1. Système de palier de clapet pour un arbre de clapet (12) dans un véhicule automobile, comprenant
un palier radial (26) dans lequel l'arbre de clapet (12) est disposé mobile en rotation, un corps de clapet (10) étant disposé sur ledit arbre,
un boitier de conduit (16) dont la section transversale d'écoulement peut être réglée par rotation de l'arbre de clapet (12) avec le corps de clapet (10),
un logement de palier (18) radialement entourant le palier radial (26),
un couvercle de logement de palier (68) axialement fermant le logement de palier (18) et comprenant une ouverture (69) à travers laquelle une extrémité de l'arbre de clapet (32) s'étend hors du logement de palier (18) et
une douille (36) radialement entourant le logement de palier (18) au moins en partie,
**caractérisé en ce**
**qu'**une rainure (70) circonférentielle est formée sur le pourtour extérieur de la section (37) du logement de palier (18) entourée par la douille (36), l'extrémité de l'arbre de clapet (32) s'étendant hors du logement de palier (18) étant disposée géodésiquement au même niveau ou au-dessus de l'extrémité de l'arbre de clapet opposée.

2. Système de palier de clapet pour un arbre de clapet dans un véhicule automobile selon la revendication 1, **caractérisé en ce que** la rainure (70) est asymétrique en section transversale, dans laquelle la première paroi (72) de la section transversale, disposée plus proche au corps de clapet (10), forme un angle plus petit avec la paroi circonférentielle (76) du logement de palier (18) que la deuxième paroi (74) de la section transversale de la rainure (70), adjacente à la première paroi et plus loin du corps de clapet (10).

3. Système de palier de clapet pour un arbre de clapet dans un véhicule automobile selon la revendication 2, **caractérisé en ce que** l'angle entre la première paroi (72) de la section transversale et la paroi circonférentielle (76) est inférieur à 45°.

4. Système de palier de clapet pour un arbre de clapet dans un véhicule automobile selon l'une quelconque des revendications 2 ou 3, **caractérisé en ce que** l'angle entre la deuxième paroi (74) de la section transversale et la paroi circonférentielle (76) est inférieur à 45°.

5. Système de palier de clapet pour un arbre de clapet dans un véhicule automobile selon l'une quelconque des revendications précédentes, **caractérisé en ce qu'**une disque de glissement (66) est disposée dans le logement de palier (18), la disque entourant l'arbre de clapet (12) et s'appuyant axialement contre un épaulement (64) conique ou tronconique ou en forme de section sphérique de l'arbre de clapet (12), le palier radial (26) étant disposé axialement entre la disque de glissement (66) et le couvercle de logement de palier (68).

6. Système de palier de clapet pour un arbre de clapet dans un véhicule automobile selon l'une quelconque des revendications précédentes, **caractérisé en ce qu'**un support de levier (34) est monté sur l'extrémité de l'arbre de clapet (32), le support étant lié à un élément actionneur.

7. Système de palier de clapet pour un arbre de clapet dans un véhicule automobile selon la revendication 6, **caractérisé en ce que** le support de levier (34) est monté sur l'extrémité de l'arbre de clapet (32) de manière étanche à fluide.

8. Système de palier de clapet pour un arbre de clapet dans un véhicule automobile selon l'une des revendications 6 ou 7, **caractérisé en ce que** la douille (36) s'étend du support de levier (34) vers le logement de palier (18).

9. Système de palier de clapet pour un arbre de clapet dans un véhicule automobile selon l'une quelconque des revendications précédentes, **caractérisé en ce que** le couvercle de logement de palier (68) est monté au logement de palier (18) par engagement positif ou par liaison de matière.

10. Système de palier de clapet pour un arbre de clapet dans un véhicule automobile selon l'une quelconque des revendications précédentes, **caractérisé en ce que** le logement de palier (18) est radialement entouré, au moins partiellement, par une douille de butée de ressort (56) comprenant un élargissement (54) contre laquelle un ressort de rappel (38) s'appuie axialement.

11. Système de palier de clapet pour un arbre de clapet dans un véhicule automobile selon la revendication 10, **caractérisé en ce que** la douille de butée de ressort (56) comprend au moins trois bosses de butée (60) par lesquelles la douille de butée de ressort (56) s'appuie axialement contre le boitier de conduit (16).

12. Système de palier de clapet pour un arbre de clapet dans un véhicule automobile selon l'une des revendications 10 à 11, **caractérisé en ce que** la douille de butée de ressort (56) comprend au moins trois bosses de butée (60) par lesquelles la douille de butée de ressort (56) s'appuie radialement contre le logement de palier (18).

13. Système de palier de clapet pour un arbre de clapet dans un véhicule automobile selon l'une des revendications 10 à 12, **caractérisé en ce que** le ressort de rappel (38) comprend une première branche de ressort (40) s'appuyant contre une butée (42) sur le boitier de conduit (16) et comprend une deuxième branche (44) formée à l'extrémité opposée du ressort de rappel (38), ladite deuxième branche s'appuyant contre une butée formée sur le support de levier (34).

14. Système de palier de clapet pour un arbre de clapet dans un véhicule automobile selon l'une quelconque des revendications précédentes, **caractérisé en ce que**, sur le côté du boitier de conduit (16) radialement opposé ai premier logement de palier (18), un deuxième logement de palier (20) est formé, dans lequel un palier radial (28) est disposé pour supporter l'arbre de clapet (12).
